(19) Europäisches Patentamt / European Patent Office / Office européen des brevets

(11) **EP 4 097 632 B1**

(12) **EUROPEAN PATENT SPECIFICATION**

(45) Date of publication and mention
of the grant of the patent:
**30.04.2025  Bulletin 2025/18**

(21) Application number: **21702262.3**

(22) Date of filing: **27.01.2021**

(51) International Patent Classification (IPC):
**G06F 18/214** (2023.01)   **G06V 10/82** (2022.01)
**G06V 40/20** (2022.01)   **G06V 40/40** (2022.01)

(52) Cooperative Patent Classification (CPC):
**G06V 40/20; G06F 18/214; G06V 10/82; G06V 40/40**

(86) International application number:
**PCT/EP2021/051864**

(87) International publication number:
**WO 2021/151947 (05.08.2021 Gazette 2021/31)**

(54) **METHOD TO GENERATE TRAINING DATA FOR A BOT DETECTOR MODULE, BOT DETECTOR MODULE TRAINED FROM TRAINING DATA GENERATED BY THE METHOD AND BOT DETECTION SYSTEM**

VERFAHREN ZUR ERZEUGUNG VON TRAININGSDATEN FÜR EIN BOT-DETEKTORMODUL, BOT-DETEKTORMODUL, DAS ANHAND VON DURCH DAS VERFAHREN ERZEUGTEN TRAININGSDATEN TRAINIERT WIRD, UND BOT-DETEKTIONSSYSTEM

PROCÉDÉ POUR GÉNÉRER DES DONNÉES D'APPRENTISSAGE POUR UN MODULE DE DÉTECTION DE ROBOT, MODULE DE DÉTECTION DE ROBOT ENTRAÎNÉ À PARTIR DE DONNÉES D'APPRENTISSAGE GÉNÉRÉES PAR LE PROCÉDÉ ET SYSTÈME DE DÉTECTION DE ROBOT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **28.01.2020  ES 202030066**

(43) Date of publication of application:
**07.12.2022  Bulletin 2022/49**

(73) Proprietor: **Universidad Autónoma de Madrid**
**28049 Madrid (ES)**

(72) Inventors:
• **MORALES MORENO, Aythami**
**28049 Madrid (ES)**
• **ORTEGA GARCÍA, Javier**
**28049 Madrid (ES)**
• **FIERREZ AGUILAR, Julián**
**28049 Madrid (ES)**
• **VERA RODRIGUEZ, Rubén**
**28049 Madrid (ES)**
• **ACIEN AYALA, Alejandro**
**28049 Madrid (ES)**
• **TOLOSANA MORANCHEL, Ruben**
**28049 Madrid (ES)**
• **BARTOLOMÉ GONZALEZ, Ivan**
**28049 Madrid (ES)**

(74) Representative: **ZBM Patents - Zea, Barlocci & Markvardsen**
**Rambla de Catalunya, 123**
**08008 Barcelona (ES)**

(56) References cited:
EP-A1- 3 540 633        EP-B1- 3 540 633
US-A1- 2018 300 572     US-A1- 2021 027 041
US-B1- 10 496 809

**Description**

**REFERENCE TO RELATED APPLICATIONS**

This patent application claims priority from Patent Application no. P202030066.

**DESCRIPTION**

This patent application claims priority from Patent Application no. P202030066. This description is related to Internet Bot detection methods, more specifically to detection methods based on human interaction with devices and to the training of models from real and synthetic data.

**BACKGROUND**

In recent years, the number of mobile devices, smartphones, or tablets, as well as Internet access through these devices has increased, and thus insecurity due to dangers such as: cyber-attacks, identity theft, proliferation of accounts and/or fake news, etc. Consequently, efforts have been redoubled to provide adequate security measures for users to prevent these types of attacks.

The most popular anti-fraud method to distinguish whether the interaction with a device is performed by a human is known as CAPTCHA, from "Completely Automated Public Turing test to tell Computer and Humans Apart". CAPTCHA comprises algorithms that determine whether a speaker on the device is human, through challenges associated with human cognitive abilities, i.e., information processing skills involving the use of memory, attention, perception, creativity and abstract or analogical thinking. Some examples of CAPTCHA are: object identification, character recognition in distorted images, translation of distorted audio, etc.

However, malware has evolved, thanks largely to new Deep Learning techniques, and has adapted to be able to circumvent security countermeasures such as CAPTCHA. Bots, autonomous computer programs that carry out specific tasks through a set of instructions programmed in any type of language, have become complex and capable of generating behavior that imitates or simulates human behavior very precisely. Such bots are difficult to detect or avoid using current methods such as blocking IP addresses, among others.

There is a need for authentication methods that enhance security, reliably identify non-human interactions, and authenticate human-machine interaction.

Document "Android-GAN: Defending against android pattern attacks using multimodal generative network as anomaly detector. Expert Systems with Applications", published on 10/09/2019 by SANG-YUN S. et al discloses a method to authenticate users in mobile devices. The method proposes to use a Generative Adversarial Network (GAN) to generate data useful to differentiate between android patterns performed by different subjects. Thus, the method is designed to extract the biometric information that serve to differentiate between subjects. This method is trained to extract specific user characteristics associated to behavioral and neuromotor information from the subject similarly to other biometric authentication systems. In user authentication systems, the attackers are represented by other users trying to supplant the identity of a legitimate user. In contrast, bot detection systems must be trained to differentiate between human subjects and bot attackers. The bot detection systems are therefore trained to detect characteristics introduced by synthetic generators.

Document "SensoryGANs: An Effective Generative Adversarial Framework for Sensorbased Human Activity Recognition" published on 7th July 2018 in the International Joint Conference on Neural Networks (IJCNN) IEEE, by WANG JIWEI et al. discloses a method to recognize gestures. The method proposes to use a Generative Adversarial Network (GAN) to generate data useful to differentiate between different human actions performed by the users (e.g. stay, walk, and jog). Thus, the method is designed to extract relevant information associated to each of the cited stay, walk, and jog actions. The method is evaluated in terms of classification accuracy of actions performed by humans.

The document US 10,496,809 discloses an application for generating a challenge-response for authentication using relations among objects.

**DESCRIPTION**

This description defines a method of detecting bots based on the analysis of an interaction with mobile devices. This is done by processing a signal from at least one sensor integrated in a device by means of a detection algorithm previously trained with real samples of human interaction. The detection algorithm allows determining if the signal, product of the interaction, has been generated from a human interaction or if it has been synthetically generated by a bot. a method of training the detection algorithm through real and synthetic interaction samples is also proposed. The generation of synthetic samples is performed through a previously trained generation method based on adverse generative neural networks and through generation methods based on the observation and characterization of real signals. Generative Adversarial Networks (GAN) have been used in the prior art for generating synthetic data. The present disclosure proposes the use of GAN within the specific field of bot detection tracking or monitoring mobile device interaction. The GAN of the present disclosure are trained by tracking or monitoring or analyzing the actions performed on a screen of a user device, such as a smartphone or tablet. The actions monitored or tracked may comprise touching a touchscreen, swiping on the screen, human gestures performed under the field of view of a camera installed in the user device, such as the front or rear camera of a smartphone.

In a first aspect, there is defined a method to generate training data for a bot detector module through human interaction with a mobile device. The method comprises receiving at least one signal generated by at least one sensor integrated into the mobile device, with the signal being at least one signal generated during the interaction of a human with the mobile device. The method also comprises calculating scalar and/or time variables of at least one sensor-generated signal that characterize human behavior, thus providing real training data and generating training data comprising at least the real training data.

By generating training data from at least one signal generated by at least one sensor during the interaction of a human with a device, biomechanical and contextual aspects are taken into account in order to more accurately and/or realistically model human interactions. Therefore, the learning data are more complete, which improves the quality of the training of the detector modules, increasing the security of the accesses through the devices (either locally or through the Internet) and improving the usability with respect to traditional detection techniques based, for example, on solving puzzles or cognitive tasks.

Training data comprising real training data therefore improves the detection of bots. By comprising more complex signals, they are more difficult for bots to mimic, so detection modules trained with real training data in a more reliable manner against non-human interactions, thus increasing security and confidence in digital environments.

In addition, the use of sensors integrated into the device allows the acquisition of real training data in a more affordable way, since neither specific nor complex device is required to obtain the real training data. In particular, using a mobile device such as a smartphone or tablet makes the acquisition a quick and simple task, since it is a device of common use and does not require special skills.

In some examples, the method comprises synthesizing at least one signal that models human behavior, so that synthetic training data may be generated.

The function allows the generation of an unlimited number of synthetic signals with characteristics similar to those that would be generated during a real human interaction. Synthesizing at least one signal that models human behavior does not require training. The operation may be based on heuristic functions obtained from a study of signals generated by humans, such as statistics, and functions that allow to model, for example, spatial trajectory and velocity of a gestures, e.g. Gaussian, linear, exponential, polynomial functions.

In addition, when generating synthetic training data, a detector module may be trained with two types of data: real and synthetic. That is, detectors may be trained by including data similar to that which would try to avoid being discriminated or classified as non-human by the discriminator, and by real samples from real human interactions. In this example, the detector module learns to distinguish the differences between real data and synthetic data so that, once training is completed, be able to discriminate non-human interactions more reliably and effectively.

The use of real and synthetic training data may, for example, serve to generate new CAPTCHAS.

In some examples, acquiring actual human interaction data is done transparently without asking the user to perform a predefined acquisition task on the mobile device. Such transparent acquisition may comprise tracking at least one of the following actions performed by a user: daily operation of a mobile phone, daily operation of a keyboard or touchpad, daily swiping actions on a screen of a user device and daily actions captured by a camera of a user device, for example human gestures performed by a user under the field of view of a from or rear camera of a smartphone, holding the device or changing the device's location. In this way, user comfort is increased since it is not necessary to ask them to perform one or more specific tasks to obtain the real human interaction data. In addition, in this way, real human interaction data are achieved more easily and quickly. Transparent detection may be carried out while the user is interacting with a device through, for example, a mobile application or *app,* a website, an online platform, etc.

In a second aspect, a training method is defined for a bot detector module to detect whether a user action is human or synthetic, characterized by comprising training a detector module using an Automatic Learning method from the training data acquired according to any of the examples described.

In a third aspect, there is defined a bot detector module trained from the training data generated by the method of any of the examples described. Using such detector module increases security not only in internet accesses but also locally, for example, in case a bot is installed in a device without internet access.

In a fourth aspect, a bot detection method is defined comprising training a bot detection module in accordance with a training method according to any of the examples described.

A fifth aspect defines a method of detecting bots using a detector module according to any of the examples described.

In a sixth aspect, there is defined a bot detection system that comprises a detector module according to any of the described examples, at least one memory and at least one processor to perform a detection method according to any of the described examples.

In a seventh aspect, a training system is defined that comprises a detector module according to any of the described examples, at least one memory and at least one processor to carry out a training method according to any of the described examples.

## BRIEF DESCRIPTION OF THE DRAWINGS

Below are described non-limitative examples of this description, with reference to the accompanying drawings, in which:

Figure 1 schematically illustrates a view of the front of a device according to an example;

Figure 2 schematically illustrates the interior of a device according to an example;

Figure 3 illustrates a flowchart of a method for generating training data for a bot detector module according to an example;

Figure 4 illustrates a flow chart of a method for generating synthetic training data according to an example;

Figure 5 illustrates a flow chart of a method for generating synthetic training data according to an example;

Figure 6 schematically illustrates a generative network and an algorithm interconnected to be trained in adversarial mode according to an example;

Figure 7 schematically illustrates a generative network trained according to an example;

Figure 8 illustrates a flowchart of a method for detecting bots according to an example; and

Figure 9 schematically illustrates a detector module according to an example.

## DETAILED DESCRIPTION OF EXAMPLES

To clarify some of the terms used in this application, the definitions of those terms are included below.

The term "device" means a mobile and/or wearable device such as mobile or smart phones, tablets, smart bracelets, smart glasses, etc.

"Transparent use" means the free use of the device by a user, that is, without asking the user to perform specific tasks so that the required data is generated. Among others, specific tasks may include: selecting from a plurality of distorted images, those representing a predefined object; drawing a specific figure on the screen, etc.

A "bot" is a computer program designed in any programming language and which performs repetitive tasks automatically. In many cases they are used to reduce workload and perform tasks more effectively than a human. However, in some cases they may be used for malicious uses such as: occupying bandwidth by downloading entire websites, denial of service attacks by sending hundreds or even thousands of requests to a web server, propagation of content interested in social networks such as fake news, etc.

The term "bot attacks" refers to insecurities created both through accesses via the Internet and those that arise locally, i.e., on a device that does not have access to the Internet.

The term "human interaction with the device" or "real human interaction" refers to any interaction performed by a human being. Interactions may be conscious, for example, entering characters; or unconscious, for example, browsing a web page; of a human user with the device, through the touch screen or by any other means, for example, holding the device or changing the device's location.

"Human behavior" means a pattern or conduct inherent in human beings that no other animal or machine possesses or may possess.

A "synthetic signal" is a signal of artificial origin, i.e., not generated by a sensor due to human interaction, and which imitates a signal from a sensor generated after human interaction.

"Handcrafted method" means an experimental synthetic signal generation method based on the observation, analysis and characterization of signals.

"Machine Learning" is the set of techniques and/or algorithms that help a machine to adapt, learn and/or evolve through the successive analysis of data, thus improving its performance.

Finally, "percentage of confidence" means a percentage that evaluates the probability that the signal analyzed by a detector module represents a human interaction. In other words, the confidence percentage quantifies the percentage of human behavior present in a signal.

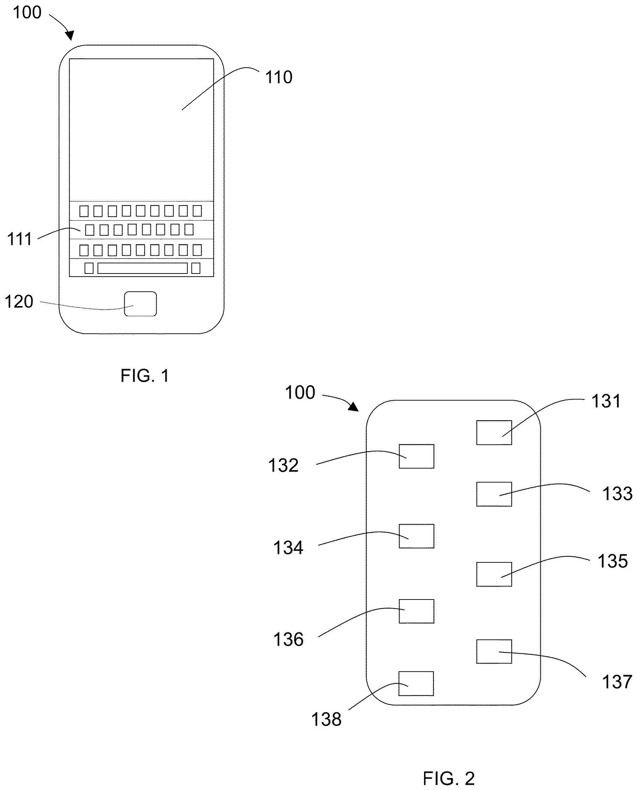

Figure 1 shows a device 100 that may comprise a screen 110, for example, a touch screen; and at least an actuator 120, which may be configured to turn the device on, turn the volume up/down, etc. The example in Figure 1 shows a smartphone, although in some examples the device may be any mobile device, such as a tablet, a smart bracelet, smart glasses, etc. The device may be any mobile device, such as a tablet, smart bracelet, smart glasses, etc., that allows the interaction of a user to access and/or browse the Internet, interact with an app, publish content on social networks, or communicate with other users through messaging or mail services.

The device may comprise a plurality of functions to facilitate human user interaction, i.e. to allow, for example, text input or selection via the screen. In the example in Figure 1, screen 110 comprises a virtual keyboard function 111 to allow the entry of text and/or typing characters.

On the other hand, a real human interaction may also include, among others: the pressure with which a user presses the keys of a virtual keyboard, measurable through a pressure sensor; the change of location of the device measured by a location system (GPS); or the inclination when holding the device measured by an accelerometer and/or gyroscope.

Figure 2 schematically illustrates the inside of the device in Figure 1. Device 100 may comprise at least one integrated sensor 131, 132, 133, 134, 135, 136, 137, 138. In some examples, the device may comprise a plurality of sensors that may be used individually or together to acquire data from a real human interaction. The sensors may be, for example, a global positioning system 131, GPS; a Wi-Fi system 132; a Bluetooth device 133; an accelerometer 134; a gyroscope 135; a microphone 136; a pressure sensor 137; a keystroke feature acquisition sensor 138, a magnetometer not illustrated; etc.

In some examples, when human interaction comprises interacting through the touch screen, the size of the screen may be taken into account to normalize the data obtained from it, thus avoiding discrepancies due to the difference in size between different devices.

Each sensor may generate at least one signal as a result of real human interaction with the device. The microphone, for example, generates a single signal from an acoustic wave when the human interaction takes place. However, depending on the sensor, several signals may be generated in a single sensor. For example, the accelerometer generates three signals related to the three degrees of freedom of a device located in a three-dimensional space.

In some examples, the actual human interaction may be defined or characterized by the signal(s) generated by a single sensor, for example, a keystroke feature acquisition sensor. In another example, human interaction may be defined by combining the signals generated by several sensors. For example, through the signals generated by the accelerometer and the pressure sensor.

In case of combining several signals from at least two different sensors, the real data characterizing human interactions may be more complex and prevent, or make it very difficult for a bot to generate synthetic signals similar to the real human interaction signals generated by the sensors. These real human interaction data may be used, for example, to generate training data that may be used to train a bot detection module to learn how to discern or detect and discriminate bots more reliably.

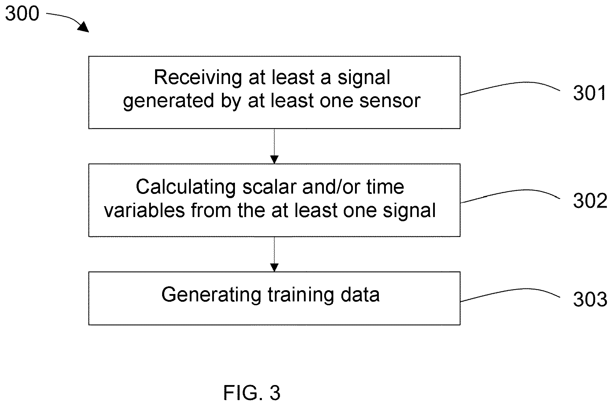

Figure 3 illustrates a method 300 for generating training data for a bot detector module of human interaction simulation with a device. The method 300 may comprise receiving, in block 301, at least one signal generated by at least one sensor integrated into the device 100 in Figure 1. This signal may be generated during the interaction of a human with the device 1 in order to take into account aspects or features of the interaction of a human user with the device. In some examples, the method may comprise receiving several signals generated by a single sensor or by several sensors.

In some examples, acquiring the actual human interaction data is done transparently, i.e. without asking the user to perform a predefined acquisition task on the mobile device.

Method 300 may also comprise calculating, in block 302, variables of at the least one signal generated by the at least one sensor. The variables may be scalar and/or temporal, depending on the sensor, and may be features that characterize or model a human behavior, for example, Cartesian coordinates, duration, speed profiles, acceleration, etc. In some examples, the sensor that generates the signal is an accelerometer, and the variables calculated are both scalar and temporal, more specifically duration, distance, displacement, angle, speed and motion efficiency.

To calculate the variables functions explicitly programmed for it or algorithms trained to automatically characterize these signals may be used, for example, neural networks that may vary depending on the variable(s) to be calculated. In some examples, the distance may be calculated by a function that calculates the Euclidean distance between the final and initial coordinates.

By calculating the variables, real training data may be provided.

The method may comprise, in block 303, generating training data that comprise at least the real training data. In this way the training module may be trained with real training data that more accurately models human interactions with a device.

The method 300 also comprises training at least one function from actual human interaction data. The function is configured to synthesize at least one signal that models human behavior.

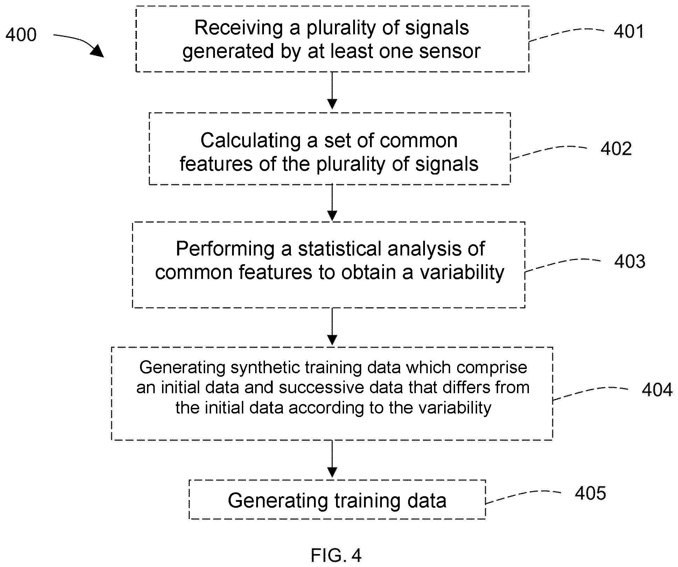

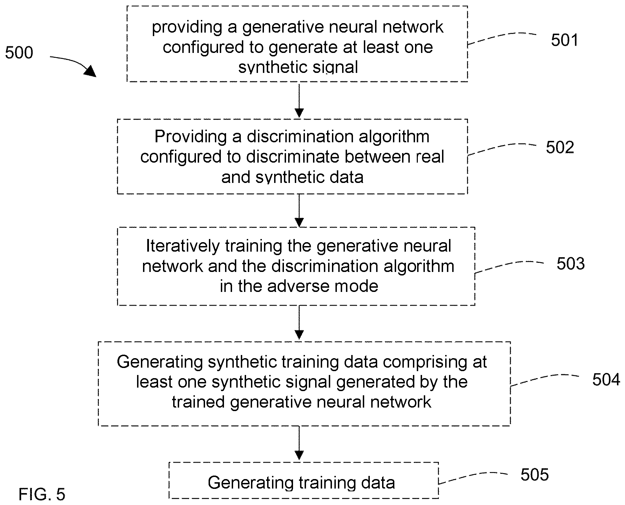

The synthesis or elaboration of at the least one signal is carried out in different ways, such as handcrafted, i.e., by a synthesis method based on the observation, analysis and characterization of a signal (see Figure 4); or by a method comprising the adversarial training of a generative neural network, or Generator; and a discrimination algorithm, or Discriminator; (see Figure 5).

Figure 4 shows a flow chart of a method 400 to synthesize at least one signal that models human behavior. The method 400 may comprise, in block 401, receiving a plurality of signals generated by at the least one integrated sensor and calculating a set of common features of the plurality of signals to characterize human behavior, in block 402.

The common features are those that serve to model human behavior, and that may vary depending on each sensor. For example, if a gesture, such as a sweep, is captured through the device's touch screen, the common features of the signals are, among others: direction, duration, displacement, angle, etc.

For example, in a gesture made by a user on the screen of the device is defined by N samples, the common features may be calculated using vectors of spatial and time coordinates $(x, y, t)$. For example, the duration of the gesture may be calculated as $t(N) - t(1)$ and displacement                                                            as

$$\sum_{i=1}^{N-1} \| ((x(i), y(i)) - (x(i+1), y(i+1)) \|$$

with ‖ ‖ being the Euclidean distance operator.

The method 400 also comprises performing, in block 403, a statistical analysis of common features to obtain a variability. The statistical analysis comprises calculating statistical variables such as the mean, standard deviation, etc. using methods of estimating probability densities of histograms, for example. The obtained variability reflects a natural variability, that is a duration, directionality, angle and speed similar to that produced by a human gesture and may serve, for example, to filter out signals that could hardly belong to a human behavior, for example, a signal that reflects an unrealistic or impossible frequency of keystrokes by a human, 2000 million times per second.

The method 400 also comprises generating, in block 404, synthetic training data which comprise an initial data and successive data that differs from the initial data according to the variability. That is, a plurality of data are generated that are different from each other but within a predetermined or natural range of variability, estimated for example, the probability densities of histograms so that they may be considered similar to a signal of real human interaction The synthetic signals may be generated synthetizing for example the displacement and speed of gestures. For doing so, a method to synthesize at least one signal that models human behavior may employ linear and exponential mathematical functions which allow generating one or more or several synthetic signals with features similar to human features. For example, if a gesture, such as a sweep, is captured through the device's touch screen, the common features of the signals is, among others: direction, duration, displacement, angle, etc. The synthetic data is characterized by a synthesized direction, a synthesized duration, a synthesized displacement, and a synthesized angle.

Likewise, the method 400 may comprise generating, in block 405, training data that comprise at least the synthetic training data. The training data may therefore comprise both real and synthetic training data. These heterogeneous training data reduce the risk of classifying both synthetic and human behaviors. By training a bot detector module with both real training data and synthetic training data, a more efficient and reliable detector for discriminating non-human interactions is obtained.

Figure 5 shows a flow chart of another method 500 to synthesize at least one signal that models human behavior. Method 500 may comprise providing, in block 501, a generative neural network configured to generate at least one synthetic signal, for example, from a random noise signal. The generative neural network may comprise at least two inputs, a first input to introduce a signal that serves as a basis for generating the synthetic function, for example, a random noise signal; and a second input to introduce a signal that modifies or influences the generation of the successive/subsequent synthetic signals, such as a feedback signal.

Method 500 may comprise providing, in block 502, a discrimination algorithm configured to discriminate between real and synthetic data. That is, the algorithm may be configured to receive a signal, analyze it and provide a confidence measure to determine whether it is due to a real human interaction or a synthetic interaction. The discrimination algorithm may, in some examples, be a neural network or other type of supervised learning algorithm such as a Vector Support Machine, Random Forest, etc. and may comprise at least three inputs. A first input may be configured to receive the signal to be analyzed, for example, a synthetic signal generated by a generative neural network; a second input to receive a signal with which to compare the signal to be analyzed, for example, a signal generated by a sensor after a real human interaction; and, a third input, which is used during training, to introduce a signal that modifies or influences the result of the discrimination algorithm, i.e. that modifies the parameters of the discrimination algorithm itself, during the successive/subsequent comparisons of the training process.

The discrimination algorithm is configured to generate a loss function as an output during training. The loss function is proportional to the error committed when discriminating. Once trained, the algorithm may be configured to discriminate an input signal, for example, a signal generated by the generative neural network, that is: to analyze and compare the input signal with a signal generated by a sensor due to real human interaction; and to give as output a percentage of its similarity with real human patterns.

The method 500 may also comprise iteratively training, in block 503, the generative neural network and the discrimination algorithm in the adverse mode. That is, the neural network may generate a plurality of successive functions that are discriminated or analyzed by the discriminator algorithm, and the result may feed back both the generative neural network and the discrimination algorithm itself in a zero-sum game that allows to improve the performance of both.

To carry out the training in an adversarial mode, the loss function generated by the discrimination algorithm and at least one random noise signal may be introduced as inputs to the generative neural network to generate a synthetic signal. A random noise signal comprises a vector of N random numbers that serves as a seed for the generative neural network to generate signals from it.

On the other hand, the synthetic signal generated by the generative neural network, a signal generated by an integrated sensor after real human interaction and/or real training data, and the loss function generated by the discrimination algorithm may be introduced as inputs to the discriminating algorithm.

Training may be carried out until the absolute value of the difference of loss functions between successive iterations is between 0.0001% and 20%. That is, until the training method is not capable of improving the outputs and/or the code of the generative neural network or the discrimination algorithm.

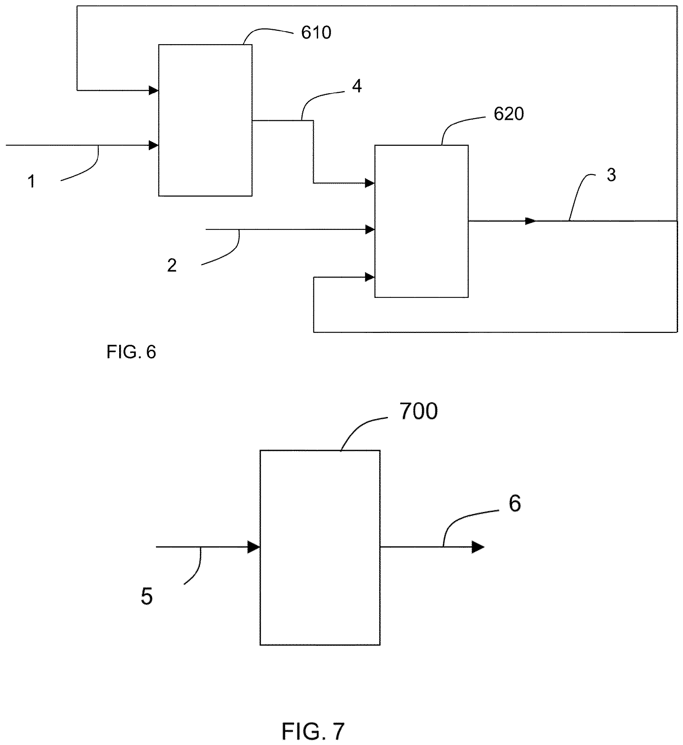

At the end of the training process, a trained generative neural network (see Figure 7) and a trained discriminator algorithm are obtained. The trained generative neural network may be used to generate synthetic samples to train better bot detection models. On the other hand, the trained discrimination algorithm may be used as a bot detector.

By achieving that the difference of loss functions between successive iterations is between 0.0001%, that is, a small variability between the loss functions of successive iterations, it is achieved that the generative neural network has learned enough, that is, that the difference between the successive signals generated is not significant and that it is capable of generating synthetic signals very similar to the signals that a sensor could generate after a real human interaction.

Method 500 may comprise generating, in block 504, synthetic training data comprising at least one synthetic signal generated by the trained generative neural network to which a random noise signal may be introduced as an input signal. Finally, the method 500 may comprise generating, in block 505, training data comprising at least the synthetic training data. That is, the training data that may be used to train a bot detector will comprise at least one synthetic signal generated by a trained neural network, so the detector will learn to discriminate more effectively, which will considerably increase the safety and reliability of the detector module.

Figure 6 schematically illustrates a generative neural network 610, and a discriminator 620 algorithm connected for adversarial mode training according to an example. The generative neural network 610 may comprise two inputs: a random noise signal 1 and a feedback signal 3, for example, the output of the discriminator algorithm; and an output signal 4, for example, a synthetic function.

The discriminator algorithm 620 may comprise three inputs: a synthetic signal 4, for example generated by the generative neural network; a real data signal 2, for example a signal generated by a sensor integrated into a mobile device after an interaction and/or real training data; and a feedback signal 3, for example the output of the discriminator algorithm 620. Feedback signal 3, i.e., the output of the discriminator algorithm 620, may comprise a loss function reflecting the probability that such signal was generated by a human or a bot.

The discriminator is fed with real human signals and with synthetic signals generated by the generative neural network. The loss function will reflect with high values when the discriminator is not able to differentiate each type of signal (human or synthetic) while it will reflect values close to zero when the discrimination is correct. This process is repeated iteratively using the loss function to improve the performance of both the discriminator and the generative neural network.

Once trained, the discriminator algorithm comprises: an input, at least one signal from at least one sensor that captures the human interaction; an output that reflects the probability that the signal was generated by a human or a bot, typically a value between 0 and 1, where values close to 1 mean a high probability that the signal is from a bot and; values close to 0, a high probability that the signal is from a human interaction.

Figure 7 shows schematically a trained generative neural network 700. The trained generative neural network 700 may comprise as input 5 a signal, for example, a random noise signal; it serves as a basis for generating a synthetic signal and as output 6 a synthetic signal. The synthetic signal generated by the Trained Generative Neural Network 700 may be used, for example, as synthetic training data to train a bot detector, since the neural network has learned enough to generate synthetic functions very similar to the signal generated by a sensor. In some examples, the trained generative neural network 700 may receive as input 5 a plurality of random noise signals, to generate a plurality of synthetic signals that may be used, for example, as synthetic training data to train a bot detector.

By using a trained neural network to generate the synthetic training data for a bot detector, better performance is achieved since the detector not only learns from real data which more specifically and complexly models human interactions, but also from signals generated from them. In other words, by using real training data and synthetic training data, it is possible to obtain bot-detector modules with improved bot-detection efficiency, so that security is increased, for example, in accesses to bank accounts or web domains, interaction in social networks, communication between users and third parties, digital account management, etc.

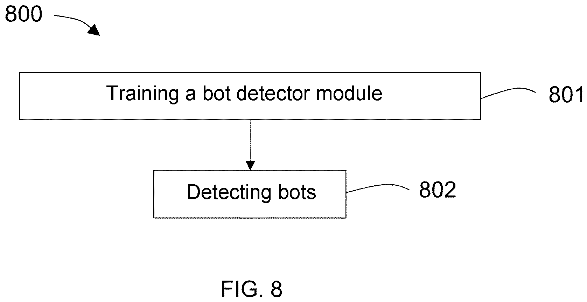

Figure 8 shows a flowchart of a method 800 of training a bot detector module to detect whether a user action is human or synthetic. The method 800 may comprise training, in block 801, a detector module using an Automatic Learning method from real training data acquired according to any of the examples described. So a trained bot detector module may be obtained, that is, capable of detecting whether the user who is interacting is a bot.

In some examples, the method 800 may comprise training the detector module with real training data and with a plurality of synthetic training data generated according to any of the examples described, for example, by a handcrafted method or with a neural network trained in an adversarial mode together with a discriminator algorithm. The training may use classification or discrimination algorithms such as Support Vector Machine, Random Forest, or Multilayer Perceptron.

By training the module with real and synthetic training data, the effectiveness and reliability of the detector module detections is considerably increased. As a consequence, security and confidence in digital environments may be significantly increased since a greater number of non-human users may be discriminated.

The method 800 may also comprise detecting, in block 802, bots by means of the training detector module. The detector module may receive an input signal and output a percentage of confidence that reflects the probability that the input signal is generated by a real human interaction.

The method 800 of training a bot detector module to detect whether a user action is human or synthetic training method may comprise the following features:

- collecting of data: the real data specified in the first aspect of the disclosure and the synthetic data specified in the present disclosure may be provided. A training method may be provided with at least 5000 synthetic samples per sensor. Several samples, for example tens of thousands of samples, may have been acquired over some years by observing and recording human gestures, human uses of a mobile device or human use of a screen of a device;

- pre-processing the collected data: in the case of swiping gestures on the screen, gestures of at least 0.3 seconds duration may be selected. Such gestures may be normalized so that they all have the same origin coordinate and/or direction;

- the normalized data may be divided in 60% of the data may be used for training, 20% of data for validation and 20% of the data for testing;

- training the bot detector module providing the 60% of the normalized data for training; training may comprise: learning rate $\alpha = 2 \cdot 10\text{-}4$ , Adam optimizer with $\beta 1 = 0.5$, $\beta 2 = 0.999$, and $\varepsilon = 10\text{-}8$ . The system may be trained for 50 epochs with a batch size of 128 samples for both Generator and Discriminator. The loss function may be 'binary crossentropy' for the Discriminator and 'mean square error' for the Generator.

- fitting hyperparameters with the 20% normalized data for validation. The hyperparameters may be the following: Both GAN networks may be trained using more than 10K human samples extracted from the HuMIdb (Human Mobile Interaction database);

- and testing the resulting classified data with the 20% of the normalized data for testing.

A synthesis method is proposed in the present disclosure that based on a Generative Adversarial Network (GAN). The GAN is made up of two networks called: Generator and Discriminator. Such networks may be formed by architectures called Recurrent Neural Networks (RNN), in particular, RNN model called Long Short-Term Memory Network (LSTM). These LSTMs may have multiple parameters. The following description represents an example implementation, but a skilled person may slightly modify some or all of the parameters and get similar results. Specifically, the LSTMs may be composed of two 128-unit LSTM layers followed by a 128-unit "Dense" layer. While a learning objective of the Generator may be to synthesize samples as realistically as possible, the learning objective of the Discriminator may be to classify human samples from synthetic samples. This may be achieved through a loss function known as "minimax los".

The synthetic signals generated according to any of the methods of the present disclosure, and human signals may be parameterized. For example, velocity, acceleration, duration, trajectory, etc... may be parametrized to obtain a characteristic vector for each gesture, which may be called "fixed length characteristic vector". The vectors of the real samples and the synthetic samples may be used to train a binary classifier which may distinguish between human or bot. Once the classifier is trained, it may be used to discriminate a gesture between human gesture or bot gesture, which have not been used during the training. Besides the classifier may parameterize the gesture and determine whether it is a gesture produced by a human or a bot. Support Vector Machines or Random Forest may be used as classifier or discriminator.

The results may be recorded in tables of results (you can see them in the article we passed to you). We can include results if you think it would help.

Regarding the computing infrastructure which may be used to train the models, a Windows PC with i7 processor, 32GB RAM may be used.... No specific hardware is required.

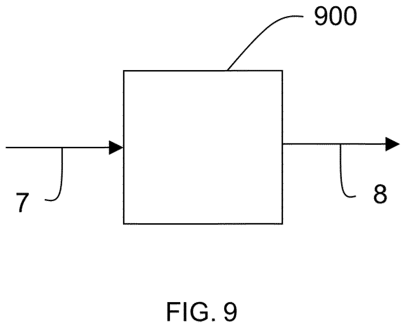

Figure 9 shows a schematic of a 900 bot detector module trained from training data generated by the method according to any of the examples described. In some examples, the module may be trained with real training data. In some examples, the module may also be trained with synthetic training data generated according to any of the examples described, for example, by means of a trained generative neural network. In one example, the module is a bot-detector device.

The Bot Detector Module 900 may be configured to receive an input signal 7, for example, a signal from a mobile device, and to generate an output 8 that may comprise a confidence percentage to give the probability that the input signal 7 was generated by a human interaction with the device, i.e., that it is a real human interaction.

Although only several examples have been described here, other alternatives, modifications, uses and/or equivalents are possible. Furthermore, all possible combinations of the described examples are also covered. Thus, the scope of this description should not be limited to the particular example but should be determined only by an appropriate reading of the following claims. The reference signs related to drawings in parentheses in a claim are only to try to increase the understanding of the claim and should not be interpreted as limiting the scope of the claim.

## Claims

1. Method (800) for training a bot detector module through Automatic Learning to detect whether a user action is a human or a synthetic action, using training data acquired by a method for generating training data through human interaction with a mobile device; wherein the method for generating training data comprises:

receiving (301) at least one signal generated by at least one sensor integrated in the mobile device, the signal being at least one generated during the human interaction with the mobile device, wherein receiving the at least one signal is carried out by tracking at least one of the following actions performed by a user: daily operation of a mobile phone, daily operation of a keyboard or touchpad, daily swiping actions on a screen of a user device and daily actions captured by a camera of a user device, holding the device or changing the device's location; calculating (302) scalar and time variables of the at least one sensor-generated signal that characterizes human gesture, thus providing real training data; and synthesizing at least one signal that models human gesture to generate (504) synthetic training data, the synthetic training data comprising a synthesized direction, a synthesized duration, a synthesized displacement, and a synthesized angle; wherein synthesizing the at least one signal that models a human gesture comprises:

providing (501) a generative neural network (610) configured to generate the at least one synthetic signal, the generative neural network comprising at least two inputs; providing (502) a discrimination algorithm (620) configured to discriminate between real and synthetic data, and to generate as output a loss function that defines the error committed in discriminating, where the discrimination algorithm comprises at least three inputs; iteratively training (503) the generative neural network (610) and the discrimination algorithm (620) in an adversarial mode by introducing as inputs to the generative neural network (610):

- the loss function (3) generated by the discrimination algorithm; and
- at least one random noise signal (1) to generate at least one synthetic signal; and by introducing as inputs to the discrimination algorithm (620):
- the at least one synthetic signal (4) generated by the generative neural network,
- the at least one signal (2) generated by the at least one integrated sensor and/or the real training data, and
- the loss function (3) generated by the discrimination algorithm;

until the absolute value of the difference in loss functions between successive iterations is between 0.0001% and 20%, thus obtaining a trained generative neural network;

generating (504) synthetic training data comprising at least one synthetic signal generated by the trained generative neural network, by introducing at least one random noise signal as input; generating (303, 505) training data comprising at least the synthetic training data and the real training data;

and wherein the method for training the bot detector module comprises training (801) the bot detector module with a plurality of synthetic training data.

2. Method for training a bot detector module according to claim 1, wherein synthesizing the at least one signal that models a human gesture comprises a synthesis method based on the observation, analysis and characterization of the at least one signal generated by the sensor, the synthesis method comprising:

receiving (401) a plurality of signals generated by at least one integrated sensor; calculating (402) a set of common features, the common features including at least one of a group comprising direction, duration, displacement, and angle, of the plurality of signals to characterize a human behavior; performing (403) a statistical analysis of the common features to obtain a variability; generating (404) synthetic training data comprising an initial data and successive data that differ from the initial data according to the variability, wherein the synthetic data is **characterized by** a synthesized direction, a synthesized duration, a synthesized displacement, and a synthesized angle; and generating (405) training data comprising at least the synthetic training data.

3. Method for training a bot detector module according to any of the claims 1 to 2, wherein the at least one integrated sensor is a global positioning system, GPS, and/or a wifi system, and/or a Bluetooth device, and/or an accelerometer, and/or a gyroscope, and/or a magnetometer, and/or a pressure sensor and/or a keystroke feature acquisition sensor.

4. Method for training a bot detector module according to any of claims 1 to 3 comprising:

   - preprocessing the real training data and the plurality of synthetic training data, by selecting swiping gestures of more than 0.3 seconds on a screen;
   - normalizing such gestures to provide at least one of the following features: same origin coordinate and direction;
   - dividing the normalized data in three groups, each group comprising 60% of the normalized data for training, 20% of the normalized data for validation and 20% of the normalized data for testing;
   - training the bot detector module providing the 60% of the normalized data for training;
   - fitting hyperparameters with the 20% normalized data for validation and
   - testing the resulting classified data with the 20% of the normalized data for testing.

5. Bots detector module (900) trained by the method for training a bot detector module according to any of the claims 1 to 4, the bots detector module configured to receive an input signal from a mobile device, and to generate an output comprising a percentage of confidence that the input signal is generated by a real human interaction.

**Patentansprüche**

1. Verfahren (800) zum Trainieren eines Bot-Detektormoduls durch automatisches Lernen, um zu erkennen, ob eine Benutzerhandlung eine menschliche oder eine synthetische Handlung ist, unter Verwendung von Trainingsdaten, die durch ein Verfahren zum Erzeugen von Trainingsdaten durch menschliche Interaktion mit einer mobilen Vorrichtung erfasst werden;

   wobei das Verfahren zum Erzeugen von Trainingsdaten Folgendes umfasst:

   empfangen (301) von mindestens einem Signal, das von mindestens einem in der mobilen Vorrichtung integrierten Sensor erzeugt wird, wobei das Signal mindestens eines ist, das während der menschlichen Interaktion mit der mobilen Vorrichtung erzeugt wird, wobei das Empfangen des mindestens einen Signals durch Verfolgen von mindestens einer der folgenden von einem Benutzer durchgeführten Aktionen durchgeführt wird: täglicher Betrieb eines Mobiltelefons, täglicher Betrieb einer Tastatur oder eines Touchpads, tägliche Wischaktionen auf einem Bildschirm einer Benutzervorrichtung und tägliche Aktionen, die von einer Kamera einer Benutzervorrichtung erfasst werden, Halten der Vorrichtung oder Ändern des Standorts der Vorrichtung; berechnen (302) von Skalar- und Zeitvariablen des mindestens einen sensorgenerierten Signals, das menschliche Gesten charakterisiert, wodurch echte Trainingsdaten bereitgestellt werden; und synthetisieren von mindestens einem Signal, das menschliche Gesten modelliert, um synthetische Trainingsdaten zu erzeugen (504), wobei die synthetischen Trainingsdaten eine synthetisierte Richtung, eine synthetisierte Dauer, eine synthetisierte Verschiebung und einen synthetisierten Winkel umfassen; wobei das Synthetisieren des mindestens einen Signals, das eine menschliche Geste modelliert, Folgendes umfasst:

   bereitstellen (501) eines generativen neuronalen Netzwerks (610), das dazu konfiguriert ist, das mindestens eine synthetische Signal zu erzeugen, wobei das generative neuronale Netzwerk mindestens zwei Eingaben umfasst; bereitstellen (502) eines Unterscheidungsalgorithmus (620), der dazu konfiguriert ist, zwischen realen und synthetischen Daten zu unterscheiden und als Ausgabe eine Verlustfunktion zu erzeugen, die den beim Unterscheiden begangenen Fehler definiert, wobei der Unterscheidungsalgorithmus mindestens drei Eingaben umfasst; iteratives Trainieren (503) des generativen neuronalen Netzes (610) und des Diskriminierungsalgorithmus (620) in einem kontradiktorischen Modus, indem als Eingaben in das generative neuronale Netz (610) Folgendes eingeführt wird:

   - die Verlustfunktion (3), die durch den Unterscheidungsalgorithmus erzeugt wird; und
   - mindestens ein Zufallsrauschsignal (1), um mindestens ein synthetisches Signal zu erzeugen;

   und indem als Eingaben in den Unterscheidungsalgorithmus (620) Folgendes eingeführt wird:

- das mindestens eine synthetische Signal (4), das von dem generativen neuronalen Netz erzeugt wird,
- das mindestens eine Signal (2), das von dem mindestens einen integrierten Sensor erzeugt wird, und/oder die realen Trainingsdaten, und
- die Verlustfunktion (3), die durch den Diskriminierungsalgorithmus erzeugt wird;

bis der Absolutwert der Differenz der Verlustfunktionen zwischen aufeinanderfolgenden Iterationen zwischen 0,0001 % und 20 % liegt, wodurch ein trainiertes generatives neuronales Netz erhalten wird;

erzeugen (504) von synthetischen Trainingsdaten, die mindestens ein synthetisches Signal umfassen, das von dem trainierten generativen neuronalen Netzwerk erzeugt wird, durch Einführen von mindestens einem Zufallsrauschsignal als Eingabe;

erzeugen (303, 505) von Trainingsdaten, die mindestens die synthetischen Trainingsdaten und die realen Trainingsdaten umfassen;

und wobei das Verfahren zum Trainieren des Bot-Detektormoduls das Trainieren (801) des Bot-Detektormoduls mit einer Vielzahl von synthetischen Trainingsdaten umfasst.

2. Verfahren zum Trainieren eines Bot-Detektormoduls nach Anspruch 1, wobei das Synthetisieren des mindestens einen Signals, das eine menschliche Geste modelliert, ein Syntheseverfahren auf Grundlage der Beobachtung, Analyse und Charakterisierung des mindestens einen durch den Sensor erzeugten Signals umfasst, wobei das Syntheseverfahren Folgendes umfasst:

empfangen (401) einer Vielzahl von Signalen, die von mindestens einem integrierten Sensor erzeugt werden;

berechnen (402) eines Satzes von gemeinsamen Merkmalen, wobei die gemeinsamen Merkmale mindestens eines von einer Gruppe beinhalten, die Richtung, Dauer, Verschiebung und Winkel der Vielzahl von Signalen umfasst, um ein menschliches Verhalten zu charakterisieren;

durchführen (403) einer statistischen Analyse der gemeinsamen Merkmale, um eine Variabilität zu erhalten;

erzeugen (404) von synthetischen Trainingsdaten, die aus Anfangsdaten und aufeinanderfolgenden Daten bestehen, die sich je nach Variabilität von den Anfangsdaten unterscheiden, wobei die synthetischen Daten **gekennzeichnet durch** eine synthetisierte Richtung, eine synthetisierte Dauer, eine synthetisierte Verschiebung und einen synthetisierten Winkel sind; und

generieren (405) von Trainingsdaten, die mindestens die synthetischen Trainingsdaten umfassen.

3. Verfahren zum Trainieren eines Bot-Detektormoduls nach einem der Ansprüche 1 bis 2, wobei der mindestens eine integrierte Sensor ein GPS (*global positioning system,* globales Positionierungssystem), und/oder ein WLAN-System und/oder eine Bluetooth-Vorrichtung und/oder ein Beschleunigungsmesser und/oder ein Gyroskop und/oder ein Magnetometer und/oder ein Drucksensor und/oder ein Sensor zum Erfassen von Tastenanschlägen ist.

4. Verfahren zum Trainieren eines Bot-Detektormoduls nach einem der Ansprüche 1 bis 3, umfassend:

- Vorverarbeiten der realen Trainingsdaten und der Vielzahl von synthetischen Trainingsdaten durch Auswählen von Wischgesten von mehr als 0,3 Sekunden auf einem Bildschirm;
- Normalisieren solcher Gesten, um mindestens eines der folgenden Merkmale bereitzustellen: gleiche Ursprungskoordinate und Richtung;
- Aufteilen der normalisierten Daten in drei Gruppen, wobei jede Gruppe 60 % der normalisierten Daten für das Training, 20 % der normalisierten Daten für die Validierung und 20 % der normalisierten Daten für das Testen umfasst;
- Trainieren des Bot-Detektormoduls, das die 60% der normalisierten Daten für das Training bereitstellt;
- Anpassen von Hyperparametern an die 20 % der normalisierten Daten für die Validierung und
- Testen der resultierenden klassifizierten Daten mit den 20% der normalisierten Daten zum Testen.

5. Bots-Detektormodul (900), das durch das Verfahren zum Trainieren eines Bot-Detektormoduls nach einem der Ansprüche 1 bis 4 trainiert wird, wobei das Bots-Detektormodul dazu konfiguriert ist, ein Eingabesignal von einer mobilen Vorrichtung zu empfangen und eine Ausgabe zu erzeugen, die einen Prozentsatz der Zuversicht umfasst, dass das Eingabesignal durch eine reale menschliche Interaktion erzeugt wird.

**Revendications**

1. Procédé (800) pour former un module de détection de bot par apprentissage automatique pour détecter si une action d'utilisateur est une action humaine ou synthétique, en utilisant des données de formation acquises par un procédé pour générer des données de formation par interaction humaine avec un dispositif mobile ; dans lequel le procédé de génération de données de formation comprend :

   recevoir (301) au moins un signal généré par au moins un capteur intégré dans le dispositif mobile, le signal étant au moins un signal généré pendant l'interaction humaine avec le dispositif mobile, dans lequel la réception du au moins un signal est effectuée en suivant au moins l'une des actions suivantes effectuées par un utilisateur : le fonctionnement quotidien d'un téléphone mobile, le fonctionnement quotidien d'un clavier ou d'un pavé tactile, les actions de balayage quotidiennes sur un écran d'un dispositif utilisateur et les actions quotidiennes capturées par une caméra d'un dispositif utilisateur, le maintien du dispositif ou le changement de l'emplacement du dispositif ;
   calculer (302) des variables scalaires et temporelles du au moins un signal généré par capteur qui caractérise les gestes humains, fournissant ainsi des données de formation réelles ; et synthétiser au moins un signal qui modélise les gestes humains pour générer (504) des données de formation synthétiques, les données d'entraînement synthétiques comprenant une direction synthétisée, une durée synthétisée, un déplacement synthétisé et un angle synthétisé ; dans lequel la synthèse du au moins un signal qui modélise un geste humain comprend :

      fournir (501) un réseau neuronal génératif (610) configuré pour générer le au moins un signal synthétique, le réseau neuronal génératif comprenant au moins deux entrées ;
      fournir (502) un algorithme de discrimination (620) configuré pour discriminer entre des données réelles et synthétiques, et pour générer en sortie une fonction de perte qui définit l'erreur commise dans la discrimination, où l'algorithme de discrimination comprend au moins trois entrées ;
      formation itérative (503) du réseau neuronal génératif (610) et de l'algorithme de discrimination (620) dans un mode contradictoire en introduisant comme entrées dans le réseau neuronal génératif (610) :

         - la fonction de perte (3) générée par l'algorithme de discrimination ; et

         - au moins un signal de bruit aléatoire (1) pour générer au moins un signal synthétique ;

      et en introduisant comme entrées dans l'algorithme de discrimination (620) :

         - le au moins un signal synthétique (4) généré par le réseau neuronal génératif,
         - le au moins un signal (2) généré par le au moins un capteur intégré et/ou les données de formation réelles, et
         - la fonction de perte (3) générée par l'algorithme de discrimination ;

      jusqu'à ce que la valeur absolue de la différence de fonctions de perte entre les itérations successives soit comprise entre 0,0001 % et 20 %, en obtenant ainsi un réseau neuronal génératif formé ;

      générer (504) des données de formation synthétiques comprenant au moins un signal synthétique généré par le réseau neuronal génératif formé, en introduisant au moins un signal de bruit aléatoire en entrée ;
      générer (303, 505) des données de formation comprenant au moins les données de formation synthétiques et les données de formation réelles ;

   et dans lequel le procédé de formation du module de détecteur de bot comprend la formation (801) du module de détecteur de bot avec une pluralité de données de formation synthétiques.

2. Procédé de formation d'un module de détecteur de bot selon la revendication 1, dans lequel la synthèse du au moins un signal qui modélise un geste humain comprend un procédé de synthèse basé sur l'observation, l'analyse et la caractérisation du au moins un signal généré par le capteur, le procédé de synthèse comprenant:

   recevoir (401) une pluralité de signaux générés par au moins un capteur intégré ;
   calculer (402) un ensemble de caractéristiques communes, les caractéristiques communes comprenant au moins l'un d'un groupe comprenant la direction, la durée, le déplacement et l'angle, de la pluralité de signaux pour caractériser un comportement humain ;
   effectuer (403) une analyse statistique des caractéristiques communes pour obtenir une variabilité ;
   générer (404) des données de formation synthétiques comprenant des données initiales et des données successives qui diffèrent des données initiales en fonction de la variabilité, dans lequel les données synthétiques sont **caractérisées par** une direction synthétisée, une durée synthétisée, un déplacement synthétisé et un angle synthétisé ; et

générer (405) des données de formation comprenant au moins les données de formation synthétiques.

3. Procédé de formation d'un module de détecteur de bot selon l'une quelconque des revendications 1 à 2, dans lequel le au moins un capteur intégré est un GPS (*global positioning system,* système de positionnement global), et/ou un système wifi, et/ou un dispositif Bluetooth, et/ou un accéléromètre, et/ou un gyroscope, et/ou un magnétomètre, et/ou un capteur de pression et/ou un capteur d'acquisition de caractéristique de frappe.

4. Procédé pour former un module de détecteur de bot selon l'une quelconque des revendications 1 à 3, comprenant:

   - prétraiter les données de formation réelles et la pluralité de données de formation synthétiques, en sélectionnant des gestes de balayage de plus de 0,3 seconde sur un écran ;
   - normaliser ces gestes pour fournir au moins l'une des caractéristiques suivantes : même coordonnée d'origine et direction ;
   - diviser les données normalisées en trois groupes, chaque groupe comprenant 60 % des données normalisées pour la formation, 20 % des données normalisées pour la validation et 20 % des données normalisées pour les tests ;
   - formation du module de détection de bot fournissant les 60 % des données normalisées pour la formation ;
   - ajuster les hyperparamètres avec les 20 % des données normalisées pour la validation et
   - tester les données classifiées résultantes avec les 20 % des données normalisées pour les tests.

5. Module détecteur de bots (900) formé moyennant le procédé de formation d'un module détecteur de bot selon l'une quelconque des revendications 1 à 4, le module détecteur de bots étant configuré pour recevoir un signal d'entrée d'un dispositif mobile, et pour générer une sortie comprenant un pourcentage de confiance que le signal d'entrée est généré par une interaction humaine réelle.

FIG. 1

FIG. 2

300

Receiving at least a signal
generated by at least one sensor — 301

Calculating scalar and/or time
variables from the at least one signal — 302

Generating training data — 303

FIG. 3

400

Receiving a plurality of signals
generated by at least one sensor ----- 401

Calculating a set of common
features of the plurality of signals ----- 402

Performing a statistical analysis of
common features to obtain a variability ----- 403

Generating synthetic training data which comprise
an initial data and successive data that differs from
the initial data according to the variability ----- 404

Generating training data ----- 405

FIG. 4

FIG. 5

500

providing a generative neural network configured to generate at least one synthetic signal — 501

Providing a discrimination algorithm configured to discriminate between real and synthetic data — 502

Iteratively training the generative neural network and the discrimination algorithm in the adverse mode — 503

Generating synthetic training data comprising at least one synthetic signal generated by the trained generative neural network — 504

Generating training data — 505

FIG. 6

FIG. 7

800

| Training a bot detector module | 801 |

Detecting bots — 802

FIG. 8

900

7

8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US P202030066 A
- WO P202030066 A
- US 10496809 B

**Non-patent literature cited in the description**

- Android-GAN: Defending against android pattern attacks using multimodal generative network as anomaly detector. **SANG-YUN S**. Expert Systems with Applications
- **WANG JIWEI**. SensoryGANs: An Effective Generative Adversarial Framework for Sensorbased Human Activity Recognition. *International Joint Conference on Neural Networks (IJCNN) IEEE*, July 2018